# EUROPÄISCHE PATENTSCHRIFT

(11) **EP 1 571 013 B1**
(45) Veröffentlichungstag und Bekanntmachung des Hinweises auf die Patenterteilung: **16.08.2006**
(21) Anmeldenummer: 05004639.0
(22) Anmeldetag: 03.03.2005
(51) Int. Cl.: B60G 11/12, B60G 7/04

(54) **Gefederte Aufhängung einer Starrachse am Fahrgestell-Rahmen eines Fahrzeuges, insbesondere Lastkraftwagens oder Omnibusses**
Sprung suspension of a rigid axle to the chassis of a vehicle, especially a lorry or a bus
Suspension à ressort d'un essieu rigide pour chassis d'un véhicule, notamment d'un camion ou un autobus

(30) Priorität: 05.03.2004 AT 3752004
(43) Veröffentlichungstag der Anmeldung: 07.09.2005
(73) Patentinhaber: MAN Nutzfahrzeuge Österreich AG, 4400 Steyr (AT)
(72) Erfinder: Keppel, Manfred, 7540 Güssing (AT); Mekina, Markus, 4400 Steyr (AT); Wagner, Joachim, 3363 Ulmerfeld (AT); Steiner, Armin, 4591 Molln (AT)

(56) Entgegenhaltungen:
- FR-A- 569 371
- FR-A- 1 357 979
- GB-A- 1 202 482
- GB-A- 2 195 589
- US-A- 1 190 966
- US-A- 1 350 110
- US-A- 2 802 663
- US-A- 3 030 101
- US-A- 4 872 653

## Beschreibung

Die Erfindung betrifft eine gefederte Aufhängung einer Starrachse am Fahrgestell-Rahmen eines Fahrzeugs, insbesondere Lastkraftwagens oder Omnibusses, mit Merkmalen der im Oberbegriff des Anspruchs 1 angegebenen Art.

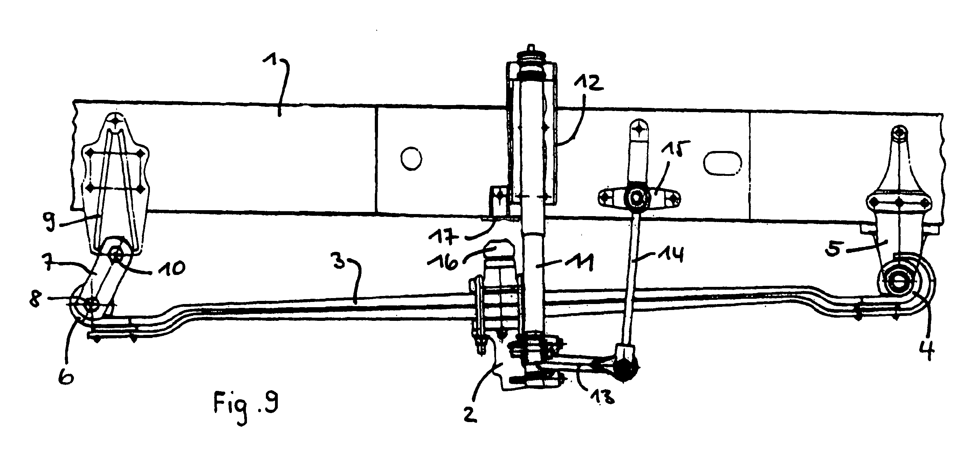

Die Erfindung geht aus von einer gefederten Starrachs-Aufhängung, wie sie bei Nutzfahrzeugen der Anmelderin mit den gattungsgemäßen Merkmalen zur Anwendung kam und aus Fig. 9 ersichtlich ist. Es handelt sich dabei um eine gezogene Achse.

Eine demgegenüber ähnlich gefederte Starrachs-Aufhängung, aber für eine - von der gattungsgemäßen abweichend - geschobene Achse, ist aus der US 4,872,653 bekannt. Bei dieser Achs-Aufhängung kommt eine beim Bruch der Blattfeder im Bereich der hinteren Befestigung wirksam werdende Federfangvorrichtung zur Anwendung, die aus einem Anschlag an der das vordere Befestigungsorgan der Blattfeder bildenden Schwinge und einer rahmenfesten Anschlagfläche besteht. Im Gegensatz zur gattungsgemäßen Starrachs-Aufhängung ist im bekannten Fall die Blattfeder in umgekehrten Sinn gelagert, das heißt, die Schwinge ist am vorderen Ende gegeben. Dabei dient der Anschlag an der Schwinge primär zur Einfederungswegbegrenzung des Rahmens gegenüber der Achse und erst sekundär zum Fangen der Blattfeder, wenn diese an ihrer hinteren Lagerstelle bricht. Weiterhin zeigen GB 1 202 482 und FR 569371 Aufhängungen nach dem Oberbegriff des Anspruchs 1.

Demgegenüber ist es Aufgabe der Erfindung, bei einer gefederten Starrachs-Aufhängung der gattungsgemäßen Art Mittel vorzusehen, die bei einem Bruch der Blattfeder an deren vorderer Befestigungsstelle beabstandet davon wirksam werden und ein eingeschränktes Weiterfahren des Fahrzeugs ermöglichen.

Diese Aufgabe wird bei einer gefederten Starrachs-Aufhängung der gattungsgemäßen Art erfindungsgemäß durch die im Kennzeichen des Anspruchs 1 angegebene Federfangvorrichtung gelöst.

Vorteilhafte Ausgestaltungen oder Details der erfindungsgemäßen Lösung sind in den Unteransprüchen gekennzeichnet.

Die erfindungsgemäße Federfangvorrichtung wird sofort wirksam, wenn die Blattfeder an ihrer vorderen Befestigungsstelle bricht. Die Blattfeder verschiebt sich in diesem Fall nach hinten. Diese Bewegung wird aber bereits nach kurzem Weg gestoppt, weil die bei dieser Längsverschiebung nach hinten ausgelenkte Schwinge schon nach kurzer Winkelbewegung mit ihrem Anschlag an der Oberseite der Blattfeder zur Anlage kommt und dann deren weitere Verschiebung nach hinten blockiert. Es steht dann der Achskörper der Starrachse zwar etwas schief, das heißt, nicht mehr senkrecht zur Fahrzeug-Längsachse. Dieser Nachteil lässt sich aber bei langsamer Weiterfahrt über die Radlenkung ausgleichen. Im Normalbetrieb und bei intakter Blattfeder behindert die erfindungsgemäße Fangvorrichtung die Einfederung des Fahrgestell-Rahmens zur Achse hin nicht, da der an der Schwinge angeordnete Anschlag in jedem Einfederungszustand des Rahmens in Bezug auf den Achskörper der Starrachse ein mehr oder weniger großes Maß von der Blattfeder-Oberseite beabstandet bleibt.

Nachstehend ist die Erfindung anhand mehrerer in der Zeichnung dargestellter Ausführungsbeispiele noch näher erläutert. In der Zeichnung zeigen:
- Fig. 1: eine Starrachs-Aufhängung mit einem ersten Ausführungsbeispiel der erfindungsgemäßen Federfangvorrichtung,
- Fig. 2: einen vergrößerten Ausschnitt aus Fig. 1 im Bereich der erfindungsgemäßen Federfangvorrichtung, wobei die durchgezogenen Linien den Normalzustand und die strich-punktierten Linien den Federfangzustand nach einem Bruch der Blattfeder im Bereich des vorderen Federauges zeigen,
- Fig. 3: die Schwinge mit Federfangvorrichtung gemäß dem ersten Ausführungsbeispiel in Seitenansicht,
- Fig. 4: die Schwinge gemäß Fig. 3 in Draufsicht,
- Fig. 5: die Schwinge gemäß Fig. 3 in Vorderansicht,
- Fig. 6: eine Schwinge mit Federfangvorrichtung entsprechend einem zweiten Ausführungsbeispiel der Erfindung,
- Fig. 7: die Schwinge gemäß Fig. 6 in Draufsicht,
- Fig. 8: die Schwinge gemäß Fig. 6 Ansicht von hinten, und
- Fig. 9: eine gefederte Starrachs-Aufhängung bekannter Bauart, von der die Erfindung ausgeht.

Zunächst wird zum besseren Verständnis der Erfindung auf den Stand der Technik gemäß Fig. 9 eingegangen. Dort ist von einem Fahrzeug, z. B. Lastkraftwagen oder Omnibus, ein Abschnitt eines ein Teil des Fahrgestells bildenden Rahmen-Längsträgers 1 gezeigt, an dem eine Starrachse mit ihrem Achskörper 2 gefedert angelenkt und befestigt ist. Hierzu dient eine entweder aus einem einzigen Federblatt oder einem Blattfederpaket bestehende Blattfeder 3, die mit ihrem vorderen Federauge 4 an einem rahmenfesten vorderen Lagerbock 5 befestigt sowie mit ihrem hinteren Federauge 6 an einer Schwinge 7, dort deren unterer Lagerstelle 8, angelenkt und über diese Schwinge 7 fliegend an einem hinteren rahmenfesten Lagerbock 9 aufgehängt ist. Über die obere Lagerstelle 10 an der Schwinge 7 ist deren Verbindung zum Lagerbock 9 hergestellt. Als weitere Teile der Starrachs-Aufhängung sind zu nennen ein Stoßdämpfer 11, der oben an einem rahmenfesten Lagerbock 12 und unten am Achskörper 2 angelenkt ist, und ein U-förmiger Stabilisator 13, der mit seinem Querschenkel am Achskörper 2 und mit seinen beiden U-Schenkeln an jeweils einem Haltestab 14 angelenkt ist, der mit seinem oberen Ende an einem rahmenfesten Bock 15 aufgehängt ist. Mit 16 ist ein Anschlagpuffer bezeichnet, der oben auf der Blattfeder 3 befestigt ist und im Zusammenwirken mit einer rahmenfesten Anschlagfläche 17 den Einfederungsweg des Rahmens 1 in Bezug auf den Achskörper 2 begrenzt. Eine Vorrichtung, die nach einem Bruch der Blattfeder 3 im Bereich ihres vorderen Federauges 4 wirksam werden könnte, ist bei dieser bekannten Achsaufhängung nicht vorgesehen gewesen. Demgegenüber schafft die Erfindung entsprechende Abhilfe, wie nachfolgend beschrieben.

Erfindungsgemäß ist im Bereich der hinteren Anlenkung der Blattfeder 3 eine Federfangvorrichtung vorgesehen, die dann, wenn die Blattfeder 3 in ihrem vorderen Befestigungsbereich 4 bricht, wirksam wird. Diese Federfangvorrichtung besteht aus einer gegenüber der vorgenannten bekannten abgewandelten, besonders gestalteten Schwinge 7' und einem an dieser (in Richtung vorderer Blattfederbefestigungsstelle 4 gesehen) beabstandet vor der unteren Lagerstelle 8 angeordneten Anschlag 18.

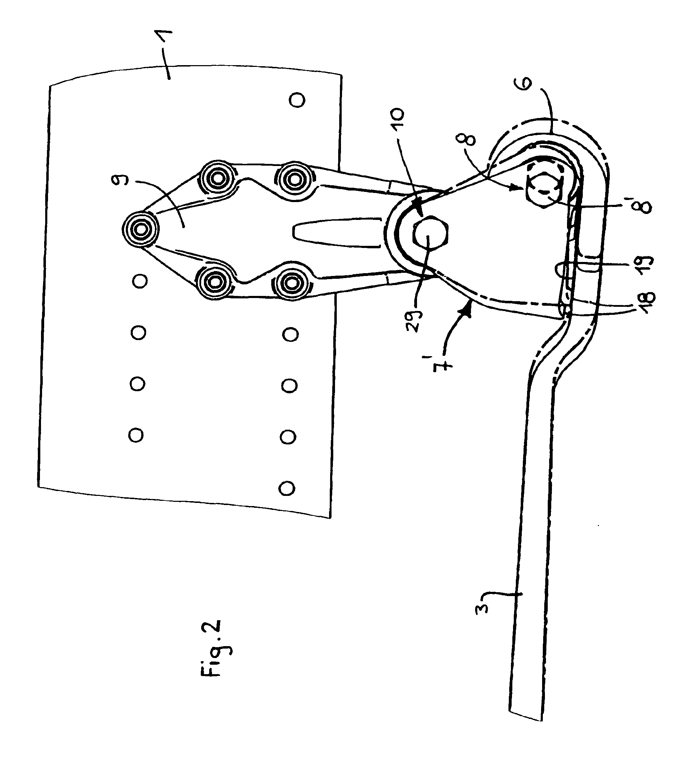

Dieser Anschlag 18 kommt - unabhängig von seiner fallweise unterschiedlichen Ausbildung und Anordnung an der Schwinge 7' - nach einem vorderen Bruch der Blattfeder 3 und einer Verschiebung derselben nach hinten aufgrund der damit einhergehenden Verschwenkung der Schwinge 7' an der Oberseite 19 der Blattfeder 3 zur Anlage, wodurch deren weitere Verschiebung nach hinten blockiert ist - siehe Fig. 2, dort die gestrichelte Darstellung. Bei intakter Blattfeder 3 dagegen bleibt der Anschlag 18 in jedem Einfederungszustand des Rahmens 1 in Bezug auf den Achskörper 2 der Starrachse ein mehr oder weniger großes Maß von der Blattfeder-Oberseite 19 beabstandet - siehe Fig. 2, dort die Darstellung mit durchgezogenen Linien.

Nachstehend ist auf Details der beiden in der Zeichnung dargestellten Ausführungsbeispiele der Erfindung noch näher eingegangen.

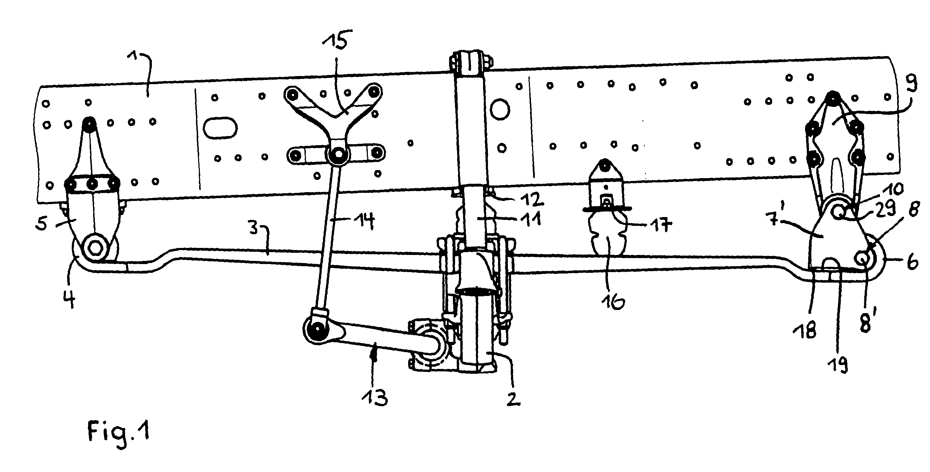

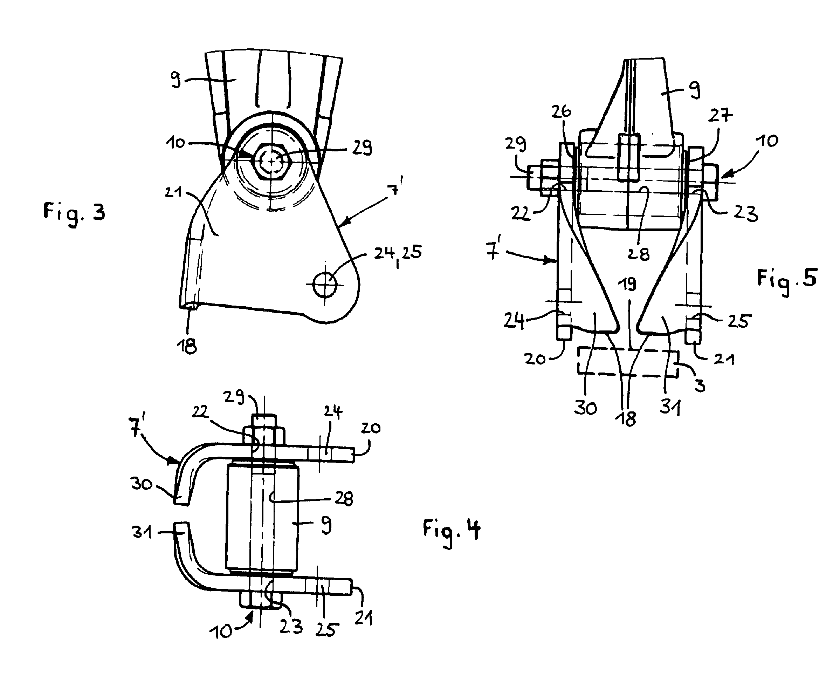

Beim Ausführungsbeispiel gemäß Fig. 1 bis 5 besteht die Schwinge 7' aus zwei voneinander beabstandeten Platten 20, 21 mit zueinander fluchtenden oberen Bohrungen 22, 23 und hiervon beabstandet zueinander fluchtenden unteren Bohrungen 24, 25. Dabei ist eine der beiden Platten 20, 21 an der inneren Anlagefläche 26 des Lagerbocks 9 und die andere der beiden Platten 20, 21 an der äußeren Anlagefläche 27 des Lagerbockes 9 anliegend über eine die oberen Bohrungen 22, 23 sowie eine Querbohrung 28 im Lagerbock 9 durchdringende Lagerschraube 29 am Lagerbock 9 schwingbeweglich gelagert. Die unteren Bohrungen 24, 25 dienen im Bereich der unteren Lagerstelle 8 zur Hindurchführung einer Lagerschraube 8' für die Befestigung des hinteren Federauges 6 der Blattfeder 3.

Beide Platten 20, 21 der Schwinge 7' weisen vordere, nach innen aufeinander zu abgewinkelte Enden 30, 31 auf, deren Unterkanten den Anschlag 18 bilden und sich hier zumindest abschnittsweise parallel zur Oberseite 19 der Blattfeder 3 erstrecken. Beide Platten 20, 21 sind vorzugsweise aus Stahl- oder anderem Metallblech durch Stanzen und Biegen hergestellt.

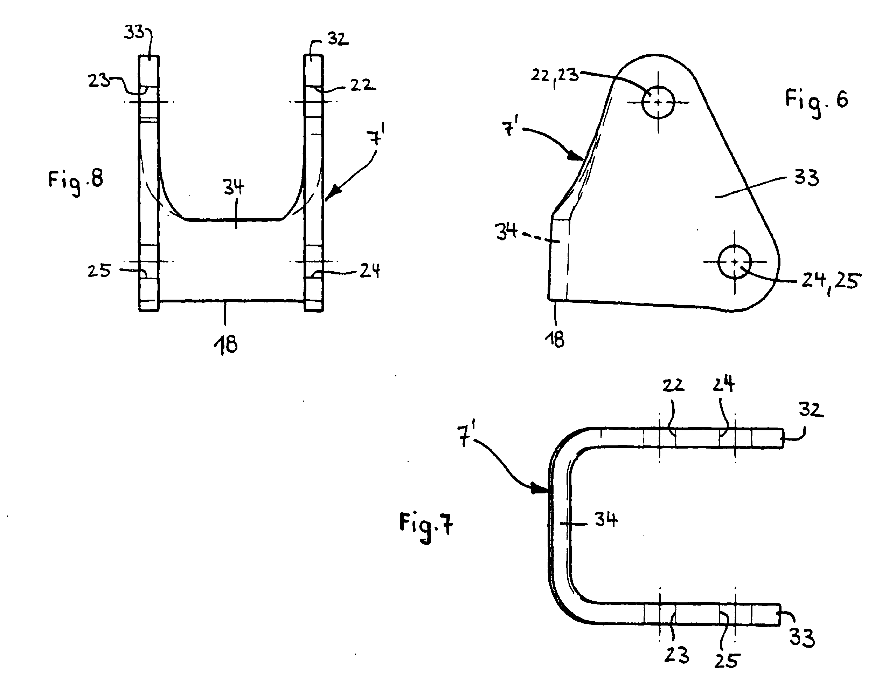

Beim Ausführungsbeispiel gemäß Fig. 6 bis 8 ist die Schwinge 7' durch ein von oben gesehen U-förmiges, vorzugsweise aus Stahl- oder anderem Metallblech hergestelltes Stanz-Biege-Teil gebildet. Dabei ist deren eine Seitenwange mit 32, deren andere, zur ersten (32) parallele Seitenwange mit 33 und ein deren beide Seitenwangen 32, 33 vorne miteinander verbindender Quersteg mit 34 bezeichnet. In den Seitenwangen 32, 33 sind gleich wie in den Platten 20, 21 des ersten Ausführungsbeispiels zueinander fluchtende obere Bohrungen 22, 23 und hierzu beabstandete untere Bohrungen 24, 25 gegeben.

Die Schwinge 7' gemäß Fig. 6 bis 8 kommt in Anbaulage mit ihren Seitenwangen 32, 33 an den Anlageflächen 26, 27 des Lagerbocks 9 zur Anlage und ist an diesem gleich wie im ersten Ausführungsbeispiel über eine die oberen Bohrungen 22, 23 sowie die Querbohrung 28 im Lagerbock 9 durchdringende Lagerschraube 29 am Lagerbock 9 schwingbeweglich gelagert. Die Bohrungen 24, 25 dienen auch hier gleich wie im Fall von Fig. 1 bis 5 zur Durchführung einer Lagerschraube 8' für die Befestigung des hinteren Federauges 6 der Blattfeder 3. Wie gut aus Fig. 8 ersichtlich, weist der Quersteg 34 der Schwinge 7' gemäß Fig. 6 bis 8 eine Unterkante auf, die den Anschlag 18 bildet und sich vorzugsweise zur Oberseite 19 der Blattfeder 3 parallel erstreckt.

## Patentansprüche

1. Gefederte Aufhängung einer Starrachse am Fahrgestell-Rahmen eines Fahrzeugs, insbesondere Lastkraftwagens oder Omnibusses, wobei der Achskörper (2) unten an einer Blattfeder (3) befestigt ist, die vorne an einem rahmenfesten Lagerbock (5) und hinten an einer unteren Lagerstelle (8) einer Schwinge (7') angelenkt ist, die wiederum über eine obere Lagerstelle (10) schwenkbeweglich an einem rahmenfesten Lagerbock (9) angelenkt ist, **dadurch gekennzeichnet, dass** eine Federfangvorrichtung vorgesehen ist, bestehend aus einer besonders gestalteten Schwinge (7') und einem an dieser Schwinge (7') beabstandet vor der unteren Lagerstelle (8) angeordneten Anschlag (18), der nach einem Bruch der Blattfeder (3) an deren vorderem Befestigungsbereich (4) und einer Verschiebung derselben nach hinten aufgrund der damit einhergehenden Verschwenkung der Schwinge (7') an der Oberseite (19) der Blattfeder (3) zur Anlage kommt und solchermaßen dann deren weitere Verschiebung nach hinten blockiert, aber bei intakter Blattfeder (3) in jedem Einfederungszustand des Rahmens (1) in Bezug auf den Achskörper (2) der Starrachse ein mehr oder weniger großes Maß von der Blattfeder-Oberseite (19) beabstandet bleibt.

2. Starrachs-Aufhängung nach Anspruch 1, **dadurch gekennzeichnet, dass** die Schwinge (7') aus zwei Platten (20, 21) mit zueinander fluchtenden oberen Bohrungen (22, 23) und hiervon beabstandet zueinander fluchtenden unteren Bohrungen (24, 25) besteht, dass eine der Platten (20, 21) an einer inneren Anlagefläche (26) des Lagerbocks (9) und die andere an einer äußeren Anlagefläche (27) des Lagerbocks (9) anliegend über eine die oberen Bohrungen (22, 23) sowie eine Querbohrung (28) im Lagerbock (9) durchdringende Lagerschraube (29) am Lagerbock (9) schwingbeweglich gelagert ist, dass das hintere Federauge (6) der Blattfeder (3) mittels einer auch die unteren Bohrungen (24, 25) in den Platten (20, 21) durchdringenden Lagerschraube (8) an der Schwinge (7') angelenkt ist, und dass die beiden Platten (20, 21) der Schwinge (7') vordere, nach innen aufeinander zu abgewinkelte Enden (30, 31) aufweisen, deren Unterkanten den Anschlag (18) bilden.

3. Starrachs-Aufhängung nach Anspruch 1, **dadurch gekennzeichnet, dass** die Schwinge (7') durch ein - von oben gesehen - U-förmiges Stanz-Biege-Teil gebildet ist, dessen beide zueinander parallele Seitenwangen (32, 33) durch einen Quersteg (34) miteinander verbunden sind, dass diese Schwinge (7') mit ihren Seitenwangen (32, 33) an einer äußeren und inneren Anlagefläche (26, 27) des Lagerbocks (9) anliegt und mittels einer die oberen Bohrungen (22, 23) sowie eine Querbohrung (28) im Lagerbock (9) durchdringenden Lagerschraube (29) am Lagerbock (9) schwingbeweglich gelagert ist, dass das hintere Federauge (6) der Blattfeder (3) mittels einer auch die unteren Bohrungen (24, 25) in den Seitenwangen (32, 33) der Schwinge (7') durchdringenden Lagerschraube (8) an der Schwinge (7') angelenkt ist, und dass der Quersteg (34) der Schwinge (7') mit seiner Unterkante den Anschlag (18) bildet.

4. Starrachs-Aufhängung nach Anspruch 2, **dadurch gekennzeichnet, dass** die beiden Platten (20, 21) der Schwinge (7') vorzugsweise aus Stahl- oder anderem Metallblech durch Stanz-Biege-Teile realisiert sind.

5. Starrachs-Aufhängung nach Anspruch 3, **dadurch gekennzeichnet, dass** die U-förmige Schwinge (7') vorzugsweise aus Stahl- oder anderem Metallblech einstückig als Stanz-Biege-Teil realisiert ist.

## Claims

1. Sprung suspension for a rigid axle on the chassis frame of a vehicle, particularly a truck or bus/coach, whereby the lower side of the axle body (2) is fastened to a leaf spring (3) whose front end is located on a frame-mounted bearing block (5) and whose rear end is located on a lower bearing point (8) on a rocker (7'), which in turn is slewably located on on a frame-mounted bearing block (9) via an upper bearing point (10), **characterised by** the provision of a spring retaining device consisting of a specially designed rocker (7') and a stop (18) which is arranged on said rocker (7') at a distance before the lower bearing point (8) and, after the leaf spring (3) has ruptured at its front fastening area (4) and shifted towards the rear as a result of the concomitant slewing action of the rocker (7'), comes into contact with the top side (19) of the leaf spring (3), thus preventing said leaf spring (3) from shifting any further towards the rear, but which, in respect of the axle body (2) of the rigid axle, keeps a more or less large distance to the top side (19) of the leaf spring (3) in any spring compression condition of the frame (1) while said leaf spring (3) is intact.

2. Suspension for a rigid axle according to Claim 1, **characterised in that** the rocker (7') consists of two plates (20, 21) with upper bores (22, 23) aligned to each other and lower bores (24, 25) aligned to each other and arranged at a distance to said upper bores (22, 23), that one of the plates (20, 21) contacts an inner contact face (26) on the bearing block (9) and the other an outer contact face (27) on the bearing block (9) and is slewably supported on the bearing block (9) via a bearing bolt (29) penetrating the upper bores (22, 23) and a transverse bore (28) in the bearing block (9), that the rear spring eye (6) in the leaf spring (3) is located on the rocker (7') via a bearing bolt (8) also penetrating the lower bores (24, 25) in the plates (20, 21) and that the two plates (20, 21) of the rocker (7') have front inward-angled ends (30, 31) which point towards each other and whose lower edges form said stop (18).

3. Suspension for a rigid axle according to Claim 1, **characterised in that** the rocker (7') is designed as a punched/bent part which, if viewed from above, is U-shaped and whose two side legs (32, 33) are parallel to and connected with each other by a transverse web (34), that this rocker (7') with its side legs (32, 33) contacts an outer and an inner contact face (26, 27) on the bearing block (9) and is slewably supported on the bearing block (9) via a bearing bolt (29) penetrating the upper bores (22, 23) and a transverse bore (28) in the bearing block (9), that the rear spring eye (6) in the leaf spring (3) is located on the rocker (7') via a bearing bolt (8) also penetrating the lower bores (24, 25) in the side legs (32, 33) of the rocker (7') and that with its lower edge the transverse web (34) of the rocker (7') forms the stop (18).

4. Suspension for a rigid axle according to Claim 2, **characterised in that** the two plates (20, 21) of the rocker (7') are punched/bent parts made preferably from a steel or other metal sheet.

5. Suspension for a rigid axle according to Claim 3, **characterised in that** the U-shaped rocker (7') is made preferably from a steel or other metal sheet as a single-piece punched/bent part.

## Revendications

1. Suspension amortie d'un essieu rigide de cadre de châssis d'un véhicule, en particulier d'un camion ou d'un car de tourisme, le corps d'essieu (2) étant fixé dans la partie inférieure à un ressort à lame (3), qui est articulé à l'avant avec un support de palier (5) fixé au cadre et à l'arrière à un palier inférieur (8) d'une bielle oscillante (7'), qui est elle-même articulée avec un support de palier (9) fixé au cadre par l'intermédiaire d'un palier supérieur (10), **caractérisée en ce qu'**un dispositif d'arrêt à ressort est prévu et se compose d'une bielle oscillante (7') de conception particulière et d'une butée (18) située à une certaine distance de cette bielle oscillante (7') devant le palier inférieur (8), qui prend appui contre la face supérieure (19) du ressort à lame après une rupture du ressort à lame (3) dans sa zone de fixation avant (4) et un décalage de celui-ci vers l'arrière suite au pivotement de la bielle oscillante (7') qui en résulte et bloque ainsi le prolongement de son décalage vers l'arrière, mais qu'une distance plus ou moins grande soit conservée entre le corps d'essieu (2) de l'essieu rigide et la face supérieure du ressort à lame (19) dans tous les états de débattement du cadre (1) tandis que le ressort à lame (3) reste intact.

2. Suspension d'essieu rigide selon la revendication 1, **caractérisée en ce que** la bielle oscillante (7') se compose de deux plaques (20, 21) dotées d'alésages supérieurs (22, 23) alignés et d'alésages inférieurs (24, 25) situés à une certaine distance des premiers, que l'une des plaques (20, 21) est logée de manière oscillante sur le support de palier (9) contre une surface d'appui intérieure (26) du support de palier (9) et l'autre plaque est logée de manière oscillante sur le support de palier contre une surface d'appui extérieure (27) du support d'appui (9) par l'intermédiaire d'une vis de palier (29) traversant le support de palier (9) par les alésages supérieurs (22, 23) et un alésage transversal (28), que l'orifice arrière (6) du ressort à lame (3) est articulé avec la bielle oscillante (7') à l'aide d'une vis de palier (8) traversant également les alésages (24, 25) dans les plaques (20, 21), et que les deux plaques (20, 21) de la bielle oscillante (7') présentent des extrémités avant (30, 31) coudées vers l'intérieur et l'une vers l'autre, dont les faces inférieures constituent la butée (18).

3. Suspension d'essieu rigide selon la revendication 1, **caractérisée en ce que** la bielle oscillante (7') est constituée d'une pièce découpée et pliée en forme de U - vue du haut - dont les deux faces latérales parallèles (32, 33) sont reliées par un montant transversal (34), que cette bielle oscillante (7') s'appuie contre une surface d'appui extérieure et intérieure (26, 27) du support de palier (9) avec ses faces latérales (32, 33) et est logée de manière oscillante sur le support d'appui (9) au moyen d'une vis de palier (29) traversant les alésages supérieurs (22, 23) et un alésage transversal (28) dans le support de palier, que l'orifice arrière (6) du ressort à lame (3) est articulé avec la bielle oscillante (7') au moyen d'une vis de palier (8) traversant également les alésages inférieurs (24, 25) dans les faces latérales (32, 33) de la bielle oscillante (7'), et que la face inférieure du montant transversal (34) de la bielle oscillante (7') constitue la butée (18).

4. Suspension d'essieu rigide selon la revendication 2, **caractérisée en ce que** les deux plaques (20, 21) de la bielle oscillante (7') se composent de préférence de pièces découpées et pliées en tôle d'acier ou d'un autre métal.

5. Suspension d'essieu rigide selon la revendication 3, **caractérisée en ce que** la bielle oscillante en forme de U (7') se compose de préférence d'une seule pièce découpée et pliée en tôle d'acier ou d'un autre métal.
